# EUROPÄISCHE PATENTSCHRIFT

(11) **EP 1 671 527 B1**
(45) Veröffentlichungstag und Bekanntmachung des Hinweises auf die Patenterteilung: **18.11.2009**
(21) Anmeldenummer: 05112037.6
(22) Anmeldetag: 13.12.2005
(51) Int. Cl.: A01B 59/00, A01B 59/06

(54) **Verbindungselement**
Connecting element
Elément de liason

(30) Priorität: 15.12.2004 US 12649
(43) Veröffentlichungstag der Anmeldung: 21.06.2006
(73) Patentinhaber: Deere & Company, Moline, IL 61265-8098 (US)
(72) Erfinder: Huenink, Brian M, Hudson, IA 50643 (US); Kollath, Michael D., Dunkerton, IA 50626 (US); Wood Jr., Robert L., Waterloo, IA 50703 (US)
(74) Vertreter: Magin, Ludwig Bernhard

(56) Entgegenhaltungen:
- EP-A- 1 116 431
- EP-A- 1 269 816
- EP-A- 1 332 657
- US-B1- 6 609 575

## Beschreibung

Die vorliegende Erfindung betrifft ein Verbindungselement, dessen Länge veränderbar eingestellt werden kann.

Landwirtschaftliche Fahrzeuge und insbesondere Traktoren weisen üblicherweise Dreipunkt-Geräteanbauten (3-Point-Hitch) auf, um ein Arbeitsgerät an das Fahrzeug bzw. an den Traktor zu koppeln. Üblicherweise umfasst ein Dreipunkt-Geräteanbau-System zwei Unterlenker und einen in der Länge einstellbaren mittig angeordneten Oberlenker. Die Länge des Verbindungselements bzw. Oberlenkers wird durch das Drehen eines arretierbaren Spannschlosses bewirkt. Das Verdrehen bzw. Rotieren des Spannschlosses wird durch einen Hebel unterstützt, welcher ein Verdrehen des Spannschlosses ohne Werkzeug ermöglicht, auch wenn das Verbindungselement mit einer Last beaufschlagt ist. Der Hebel kann auch eine Arretierfunktion umfassen, um eine unerwünschte Verdrehung des Spannschlosses zu verhindern.

Aus dem Stand der Technik sind längenverstellbare Verbindungselemente bekannt, welche an einer vorgebbaren Stelle einen relativ zum Verbindungselement verdrehbar angeordneten Hebel aufweisen. Lediglich beispielhaft wird hierzu auf die US 2,878,043 und die US 4,194,757 verwiesen. Diese Konstruktionen können problematisch sein, wenn andere Gegenstände oder Vorrichtungen in den Bewegungsbereich des Hebels eingreifen, wenn dieser zum Einstellen der Länge des Verbindungselements benutzt wird.

Andere längenverstellbare Verbindungselemente weisen Hebel auf, welche drehbar an einem Klammerbauteil befestigt sind und welche relativ zu dem Spannschloss bewegbar angeordnet sind. So weisen beispielsweise die Spannschlösser der US 6,609,575 oder US 6,056,069 einen hexagonal-förmigen oder quadratischen Körperabschnitt auf und umfassen ein Klammerbauteil, welches eine hexagonale oder quadratische Öffnung aufweist. Aus der US 6, 609, 575 ist ein Verbindungselement gemäß dem Oberbegriff des Anspruchs 1 bekannt. Nachteilig bei diesen Konstruktionen ist, dass der Verriegelungshebel nur dann verriegelt werden kann, wenn der Hebel in eine Richtung gedreht ist.

Der vorliegenden Erfindung liegt daher die Aufgabe zugrunde, ein Verbindungselement der eingangs genannten Art anzugeben und weiterzubilden, durch welches die vorgenannten Probleme überwunden werden. Insbesondere soll der Hebel derart ausgebildet werden, dass er nicht an anderen Gegenständen bzw. Vorrichtungen anstößt, wenn er betätigt wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Verbindungselement der eingangs genannten Art gekennzeichnet durch ein erstes und ein zweites Kupplungsstück, ein mittleres Verbindungsteil, ein Klammerbauteil und eine Hantel. An mindestens einem der - bevorzugt an beiden - Kupplungsstücke(n) ragt ein Befestigungselement ab. Das erste und das zweite Kupplungsstück sind jeweils mit einer Gewindeverbindung mit dem mittleren Verbindungsteil an entgegengesetzten Enden des Verbindungsteils gekoppelt. Das Verbindungsteil umfasst einen mehrere Seitenflächen aufweisenden Bereich. Ein erster Abschnitt ist jenseits eines ersten Endes des Bereichs vorgesehen. Ein zweiter Abschnitt ist jenseits eines zweiten Endes des Bereichs vorgesehen. Der Bereich ist zwischen dem ersten und dem zweiten Abschnitt angeordnet. Das Klammerbauteil ist relativbewegbar zu dem Verbindungsteil angeordnet. Das Klammerbauteil ist dann relativ zu dem Verbindungsteil verdrehbar, wenn das Klammerbauteil an einem der beiden Abschnitte positioniert ist. Das Klammerbauteil ist dann nicht relativ zu dem Verbindungsteil verdrehbar, wenn das Klammerbauteil an dem Bereich positioniert ist. Der Hebel ist drehbar relativ zu dem Klammerbauteil angeordnet, so dass ein Ende des Hebels mit einem Befestigungselement in Eingriff gebracht werden kann, um eine Verdrehung des Verbindungsteils relativ zu den Kupplungsstücken zu verhindern. Der erste und/oder der zweite Abschnitt könnte führungslos für das Klammerbauteil ausgeführt sein.

In einer bevorzugten Ausführungsform ragt der erste Abschnitt von einem ersten Ende des Bereichs ab und/oder der zweite Abschnitt ragt von einem zweiten Ende des Bereichs ab. Somit könnte der (mittlere) Bereich und der erste und der zweite Abschnitt einteilig ausgebildet sein.

Ein Kupplungsstück könnte ein stabförmiges Bauteil aufweisen, welches bevorzugt ein Gewinde aufweist. Hierbei handelt es sich vorzugsweise um ein Außengewinde.

Ein Kupplungsstück könnte ein gabelförmiges Kupplungsmittel aufweisen, mit welchem das Verbindungselement an einem Fahrzeug, an einem Arbeitsgerät oder an einem andern Gegenstand befestigbar ist.

Besonders bevorzugt weist der Bereich eine äußere Oberfläche auf, welche mehrere im Wesentlichen eben ausgebildete und aneinandergrenzend angeordnete Seitenflächen aufweist. Das Klammerbauteil könnte eine innere Oberfläche aufweisen, welche im Wesentlichen komplementär zu der äußeren Oberfläche des Bereichs ausgebildet sein könnte.

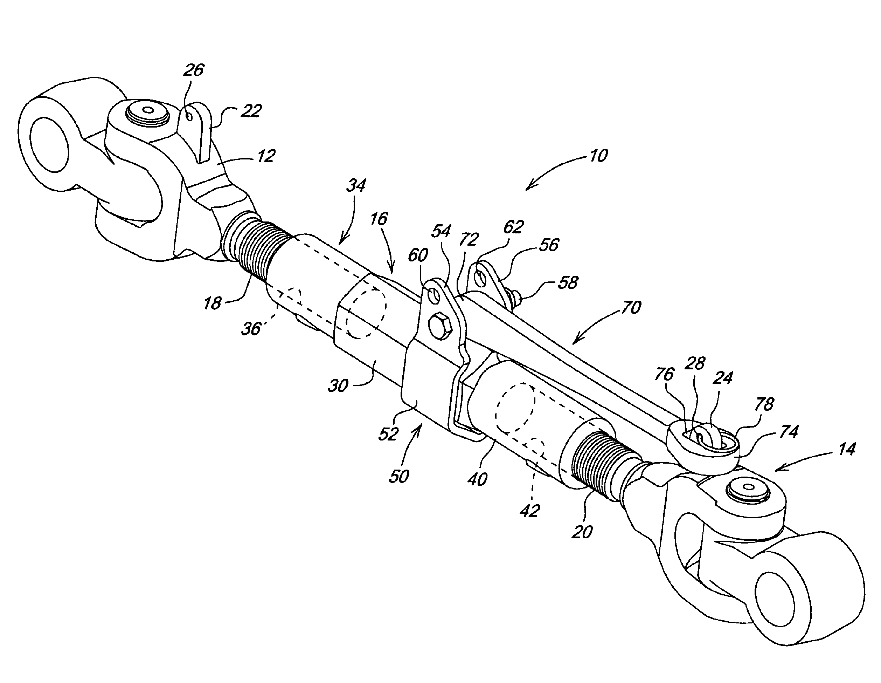

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: in einer perspektivischen Ansicht ein Ausführungsbeispiel der vorliegenden Erfindung eines einstellbaren Verbindungselements.

Die einzige Fig. zeigt ein einstellbares Verbindungselement 10, welches ein erstes und ein zweites gabelförmiges Bauteil 12, 14 und ein Verbindungsteil oder ein Spannschloss 16 aufweist. Jedes Bauteil 12, 14 weist eine Stange, Strebe, Stab, Pfosten oder Holm 18, 20 mit einem Außengewinde auf. Jedes Bauteil 12, 14 weist weiterhin einen Befestigungsstumpf oder -stummel 22, 24 auf, welcher jeweils in radialer Richtung von dem Bauteil 12, 14 abragt. Jeder Befestigungsstummel 22, 24 weist eine Bohrung 26, 28 auf, welche sich durch einen Endbereich oder an der Spitze des Befestigungsstummels 22, 24 erstreckt.

Das Verbindungsteil 16 weist einen mittleren Bereich 30 auf, welcher ein nicht zylindrisch ausgebildetes, mehrere Seitenflächen aufweisendes Profil umfasst. Ein erster im Wesentlichen zylindrisch ausgebildeter Abschnitt 34 mit einem kleineren Außendurchmesser erstreckt sich in axialer Richtung von dem mittleren Bereich 30 in Richtung des ersten Bauteils 12 und weist eine Bohrung 36 mit einem Innengewinde auf, in welche der Holm 18 eingeschraubt werden kann. Ein zweiter im Wesentlichen zylindrisch ausgebildeter Abschnitt 40 mit einem kleineren Außendurchmesser erstreckt sich in axialer Richtung von dem mittleren Bereich 30 in Richtung des zweiten Bauteils 14 und weist eine Bohrung 42 mit einem Innengewinde auf, in welche der Holm 20 eingeschraubt werden kann. Die Gewinde sind hierbei derart ausgebildet, dass die Länge des Verbindungselements 10 vergrößert werden kann, wenn das Verbindungsteil 16 in eine Richtung verdreht wird und dass das Verbindungselement 10 in seiner Länge verkleinert werden kann, wenn das Verbindungsteil 16 in die entgegengesetzte Richtung verdreht wird.

Ein Klammerbauteil 50 ist an dem Verbindungsteil 16 angeordnet. Das Klammerbauteil 50 kann über die gesamte Länge des Verbindungsteils 16 bewegt bzw. verschoben werden. Das Klammerbauteil 50 umfasst ein im Wesentlichen U-förmig, nicht zylindrisch ausgebildetes und mehrere Seitenflächen aufweisendes Befestigungsteil 52 auf, welches im Wesentlichen komplementär zu dem mehrseitig ausgebildeten mittleren Bereich 30 des Verbindungsteils 16 ausgebildet ist und diesen mittleren Bereich 30 aufnimmt bzw. zumindest teilweise umgibt. Auf diese Weise kann das Befestigungsteil 52 in axialer Richtung relativ zum mittleren Bereich 30 bewegt werden. Es kann allerdings nicht relativ zum Verbindungsteil 16 verdreht werden, solange das Befestigungsteil 52 den mittleren Bereich 30 aufnimmt bzw. umgibt. Das Befestigungsteil 52 kann relativ zum Verbindungsteil 16 verdreht werden, wenn das Befestigungsteil 52 in axialer Richtung von dem mittleren Bereich 30 wegbewegt und zu einem der beiden Abschnitte 34 oder 40 mit kleinerem Außendurchmesser bewegt wird. Wenn also das Befestigungsteil 52 nicht mehr im Eingriff mit dem mittleren Bereich 30 steht, kann das Befestigungsteil 52 relativ zum Verbindungsteil 16 verdreht werden.

Zwei Beine oder Schenkel 54, 56 ragen von entgegengesetzten Seiten des Befestigungsbauteils 52 ab. Ein Drehbolzen 58 erstreckt sich durch die zwei Schenkel 54, 56 und wird hierbei von zwei (in der Fig. nicht gezeigten) Bohrungen aufgenommen. Zwei weitere fluchtend zueinander angeordnete Bohrungen 60, 62 erstrecken sich durch ein oberes Ende der Schenkel 54, 56. Wenn das Verbindungselement 10 als Oberlenker in einem Dreipunkt-Geräteanbau (in der Fig. nicht gezeigt) verwendet wird, können die Bohrungen 60, 62 einen (in der Fig. ebenfalls nicht gezeigten) Befestigungsbolzen aufnehmen, welcher dazu verwendet werden kann, das Verbindungselement 10 in einer oberen verstauten Stellung zu halten, wenn das Verbindungselement 10 nicht benutzt wird.

Ein länglicher Einstellhebel, ein Griffstück, eine Hantel oder ein Hebel 70 weist ein Ende 72 auf, welches drehbar bzw. schwenkbar zu dem Drehbolzen 58 angeordnet ist bzw. den Drehbolzen 58 aufnimmt. Das andere Ende 74 des Hebels 70 weist eine Aussparung oder Öffnung 76 auf, welche den Befestigungsstummel 22 oder 24 aufnehmen bzw. umschließen kann. Der Hebel 70 kann in die in der Fig. gezeigte Position gedreht oder verbracht werden, in welcher die Öffnung 76 den Befestigungsstummel 24 aufnimmt. Der Hebel 70 kann in dieser Position durch einen Sicherungsring 78 arretiert werden. Der Hebel 70 kann um den Drehbolzen 58 verdreht werden und von dem Befestigungsstummel 24 gelöst bzw. wegbewegt werden, so dass ein Bediener mit dem Hebel 70 das Verbindungsteil 16 in die eine oder in die andere Richtung um seine Mittelachse verdrehen kann, um nämlich das Verbindungselement 10 zu verlängern oder zu verkürzen. Dies ist solange möglich, solange die das Befestigungsteil 52 mit dem mehrseitig ausgebildeten mittleren Bereich 30 in Eingriff steht. Weiterhin kann der Hebel 70 aus der in der Fig. gezeigten Stellung um 180 Grad um den Drehbolzen 58 gedreht werden und hierbei relativ zum mittleren Bereich 30 bewegt werden, so dass die Öffnung 76 des Hebels 70 den Befestigungsstummel 22 aufnimmt bzw. umschließt.

Wenn der Hebel 70 von den Befestigungsstummeln 22, 24 gelöst ist, kann das Klammerbauteil 50 weg von dem mittleren Bereich 30 zu einem der zylindrisch ausgebildeten Abschnitte 34 oder 40 bewegt werden, so dass das Klammerbauteil 50 um die Längsachse des Verbindungselements 10 gedreht bzw. verdreht werden kann, und zwar ohne den mittleren Bereich 30 zu drehen, so dass die Hantel 70 relativ zu dem mittleren Bereich 30 orientiert bzw. angeordnet werden kann.

Die Zusammenwirkung zwischen dem Klammerbauteil 50 und der Hantel 70 ermöglicht eine neue Orientierung bzw. Ausrichtung der Hantel 70 relativ zum mittleren Bereich 30, und zwar an jedem Endbereich des Verbindungsteils 16, nämlich an den Abschnitten 34 oder 40. Weiterhin kann das Verbindungsteil 16 von einer Drehung relativ zu den beiden gabelförmigen Bauteilen 12, 14 dadurch verhindert werden, dass die Hantel 70 zumindest in einer Position, im Konkreten an zwei gegenüberliegenden Positionen in Eingriff mit einem der zwei Befestigungsstummel 22, 24 gebracht werden kann.

Abschließend sei ganz besonders darauf hingewiesen, dass das voranstehend erörterte Ausführungsbeispiel lediglich zur Beschreibung der beanspruchten Lehre dienen, diese jedoch nicht auf das Ausführungsbeispiel einschränkt.

## Patentansprüche

1. Verbindungselement, dessen Länge veränderbar eingestellt werden kann, mit einem ersten und einem zweiten Kupplungsstück (12, 14), einem mittleren Verbindungsteil (16), einem Klammerbauteil (50) und einem Hebel (70), wobei an mindestens einem der Kupplungsstücke (12, 14) ein Befestigungselement (22, 24) abragt, wobei das erste und das zweite Kupplungsstück (12, 14) jeweils mit einer Gewindeverbindung mit dem mittleren Verbindungsteil (16) an entgegengesetzten Enden des Verbindungsteils (16) gekoppelt ist, wobei das Verbindungsteil (16) einen mehrere Seitenflächen aufweisenden Bereich (30) sowie einen Abschnitt (34) jenseits eines Endes des Bereichs (30) umfasst, wobei das Klammerbauteil (50) relativbewegbar zu dem Verbindungsteil (16) angeordnet ist, wobei das Klammerbauteil (50) dann relativ zu dem Verbindungsteil (16) verdrehbar ist, wenn das Klammerbauteil (50) an dem Abschnitt (34) positioniert ist, wobei das Klammerbauteil (50) dann nicht relativ zu dem Verbindungsteil (16) verdrehbar ist, wenn das Klammerbauteil (50) an dem Bereich (30) positioniert ist, und wobei der Hebel (70) drehbar relativ zu dem Klammerbauteil (50) angeordnet ist, so dass ein Ende (74) des Hebels (70) mit einem der Befestigungselemente (22, 24) in Eingriff gebracht werden kann, um eine Verdrehung des Verbindungsteils (16) relativ zu den Kupplungsstücken (12, 14) zu verhindern, **dadurch gekennzeichnet, dass** das Verbindungsteil (16) einen weiteren Abschnitt (40) jenseits eines weiteren Endes des mehrere Seitenflächen aufweisenden Bereichs (30) umfasst, wobei der Bereich (30) zwischen den beiden Abschnitten (34, 40) angeordnet ist, und dass das Klammerbauteil (50) ferner dann relativ zu dem Verbindungsteil (16) verdrehbar ist, wenn das Klammerbauteil (50) an dem weiteren Abschnitt (40) positioniert ist.

2. Verbindungselement nach Anspruch 1, **dadurch gekennzeichnet, dass** zumindest einer der beiden Abschnitte (34, 40) von einem Ende des Bereichs (30) abragt.

3. Verbindungselement nach Anspruch 1 oder 2, **dadurch gekennzeichnet, dass** ein Kupplungsstück (12, 14) ein stabförmiges Bauteil aufweist, welches bevorzugt ein Gewinde, insbesondere ein Außengewinde, aufweist.

4. Verbindungselement nach einem der Ansprüche 1 bis 3, **dadurch gekennzeichnet, dass** ein Kupplungsstück (12, 14) ein gabelförmiges Kupplungsmittel aufweist, mit welchem das Verbindungselement (10) an einem Fahrzeug befestigbar ist.

5. Verbindungselement nach einem der Ansprüche 1 bis 4, **dadurch gekennzeichnet, dass** der Bereich (30) eine äußere Oberfläche aufweist, welche mehrere im Wesentlichen eben ausgebildete und aneinandergrenzend angeordnete Seitenflächen aufweist, und dass das Klammerbauteil (50) eine innere Oberfläche aufweist, welche im Wesentlichen komplementär zu der äußeren Oberfläche des Bereichs (30) ausgebildet ist.

## Claims

1. Connecting element, the length of which can be adjusted variably, with a first and a second coupling piece (12, 14), a central connecting part (16), a clip component (50) and a lever (70), wherein a fastening element (22, 24) protrudes on at least one of the coupling pieces (12, 14), wherein the first and the second coupling piece (12, 14) are each coupled by a threaded connection at opposite ends of the connecting part (16) to the central connecting part (16), wherein the connecting part (16) comprises a region (30) having a plurality of side surfaces, and a section (34) on the other side of one end of the region (30), wherein the clip component (50) is arranged movably relative to the connecting part (16), wherein the clip component (50) is rotatable relative to the connecting part (16) when the clip component (50) is positioned on the section (34), wherein the clip component (50) is not rotatable relative to the connecting part (16) when the clip component (50) is positioned on the region (30), and wherein the lever (70) is arranged rotatably relative to the clip component (50) such that one end (74) of the lever (70) can be brought into engagement with one of the fastening elements (22, 24) in order to prevent rotation of the connecting part (16) relative to the coupling pieces (12, 14), **characterized in that** the connecting part (16) comprises a further section (40) on the other side of a further end of the region (30) having a plurality of side surfaces, the region (30) being arranged between the two sections (34, 40), and **in that** the clip component (50) is furthermore rotatable relative to the connecting part (16) when the clip component (50) is positioned on the further section (40).

2. Connecting element according to Claim 1, **characterized in that** at least one of the two sections (34, 40) protrudes from one end of the region (30).

3. Connecting element according to Claim 1 or 2, **characterized in that** one coupling piece (12, 14) has a bar-shaped component which preferably has a thread, in particular an external thread.

4. Connecting element according to one of Claims 1 to 3, **characterized in that** one coupling piece (12, 14) has a fork-shaped coupling means with which the connecting element (10) can be fastened to a vehicle.

5. Connecting element according to one of Claims 1 to 4, **characterized in that** the region (30) has an outer surface which has a plurality of side surfaces which are of substantially flat design and are arranged adjacent to one another, and **in that** the clip component (50) has an inner surface which is designed to be substantially complementary to the outer surface of the region (30).

## Revendications

1. Elément de liaison, dont la longueur peut être ajustée de manière variable, comprenant un premier et un deuxième élément d'accouplement (12, 14), une partie de connexion centrale (16), un composant de pince (50) et un levier (70), un élément de fixation (22, 24) dépassant au niveau d'au moins un des éléments d'accouplement (12, 14), le premier et le deuxième élément d'accouplement (12, 14) étant à chaque fois accouplés par une connexion filetée à la partie de connexion centrale (16) à des extrémités opposées de la partie de connexion (16), la partie de connexion (16) comprenant une région (30) présentant plusieurs faces latérales ainsi qu'une portion (34) de chaque côté d'une extrémité de la région (30), le composant de pince (50) étant disposé de manière déplaçable relativement par rapport à la partie de connexion (16), le composant de pince (50) pouvant ainsi tourner par rapport à la partie de connexion (16), lorsque le composant de pince (50) est positionné sur la portion (34), le composant de pince (50) ne pouvant pas tourner par rapport à la partie de connexion (16) lorsque le composant de pince (50) est positionné sur la région (30), et le levier (70) étant disposé de manière rotative par rapport au composant de pince (50) de sorte qu'une extrémité (74) du levier (70) puisse être amenée en prise avec l'un des éléments de fixation (22, 24) afin d'empêcher une rotation de la partie de connexion (16) par rapport aux éléments d'accouplement (12, 14), **caractérisé en ce que** la partie de connexion (16) comprend une autre portion (40) de chaque côté d'une autre extrémité de la région (30) présentant plusieurs faces latérales, la région (30) étant disposée entre les deux portions (34, 40) et **en ce que** le composant de pince (50) peut en outre être tourné par rapport à la partie de connexion (16) lorsque le composant de pince (50) est positionné sur l'autre portion (40).

2. Elément de liaison selon la revendication 1, **caractérisé en ce qu'**au moins l'une des deux portions (34, 40) dépasse d'une extrémité de la région (30).

3. Elément de liaison selon la revendication 1 ou 2, **caractérisé en ce qu'**un élément d'accouplement (12, 14) présente un composant en forme de barre qui présente de préférence un filetage, notamment un filetage externe.

4. Elément de liaison selon l'une quelconque des revendications 1 à 3, **caractérisé en ce qu'**un élément d'accouplement (12, 14) présente un moyen d'accouplement en forme de fourche, avec lequel l'élément de liaison (10) peut être fixé sur un véhicule.

5. Elément de liaison selon l'une quelconque des revendications 1 à 4, **caractérisé en ce que** la région (30) présente une surface extérieure qui présente plusieurs faces latérales réalisées essentiellement sous forme plane et disposées les unes à côté des autres, et **en ce que** le composant de pince (50) présente une surface intérieure qui est réalisée essentiellement de manière complémentaire à la surface extérieure de la région (30).
